# EUROPEAN PATENT SPECIFICATION

(11) **EP 1 989 904 B1**
(45) Date of publication and mention of the grant of the patent: **04.11.2009**
(21) Application number: 06708039.0
(22) Date of filing: 06.02.2006
(51) Int. Cl.: H04W 72/04, H04L 12/56

(54) **METHOD FOR SCHEDULING VOIP TRAFFIC FLOWS**
VERFAHREN ZUM EINTEILEN VON VOIP-VERKEHRSFLÜSSEN
PROCÉDÉ D'ORDONNANCEMENT DE FLUX DE TRAFIC VOIP

(43) Date of publication of application: 12.11.2008
(73) Proprietor: Telefonaktiebolaget LM Ericsson (publ), 164 83 Stockholm (SE)
(72) Inventor: JOHANSSON, Ingemar, S-97632 Luleå (SE); PEISA, Janne, FI-02130 Espoo (FI)
(74) Representative: Norin, Klas
(86) International application number: PCT/EP2006/050692
(87) International publication number: WO 2007/090459

(56) References cited:
- EP-A- 1 445 969
- EP-A- 1 598 989
- WO-A-03/088702
- US-B1- 6 188 905
- US-B1- 6 385 454

## Description

### Technical field

The present invention relates in general to the field of communications, and, in particular, to communication systems where a user of a first user equipment is able to communicate with a second user using, for example, a second user equipment or a PSTN phone using a VoIP service, such as a MMTel (Multimedia Telephony) service, PoC service or a PoC VGM (Video Group Message), provided by an application server, e.g. a SIP application server (Session Initiation Protocol application server).

### Background of the invention

As wireless communication systems evolve, there is an increasing need to accommodate wireless communications systems that not only convey (i.e. transmit and/or receive) voice but also allow data information to be conveyed between users of the communication system. The data information is various types of digital information such as text, graphics and other digital information that are typically not time sensitive. Information such as voice or video are time sensitive in that once transmission has commenced there can be no appreciable delay in subsequent transmissions. Any appreciable delay in consecutive transmissions of the time sensitive information causes annoying interruption or causes the information to be unintelligible to a receiving user equipment (UE), e.g. cellular telephones, pagers and wireless computers. Data information, on the other hand, can tolerate delays in consecutive transmissions and thus can be processed differently from time sensitive signals.

High Speed Packet Access (HSPA) and mainly High Speed Downlink Packet Access (HSDPA) has emerged as interesting alternative to traditional dedicated channels (DHC) when Voice over Internet Protocol (VoIP) is to become implemented on a wide basis. VoIP is the routing of voice conversations over the Internet or any other IP-based network. The voice data flows over a general-purpose packet-switched network, instead of traditional dedicated, circuit switched voice transmissions lines. Wireless communication systems such as the HSDPA specification in the Universal Mobile Telecommunication System (UMTS) standard can accommodate the conveyance of data information hereinafter referred to wireless data system. A protocol is generally a set of rules that dictate how communication is to be initiated, maintained and terminated between system equipment and/or user equipment of the communication system. The wireless data systems are structured in substantially the same manner as other wireless communication systems in that they comprise a plurality of base stations located in cells. A cell is a geographical area defined by physical boundaries. Each cell has base station equipment (or cell site) that services user equipment (UE) located in that cell. The UE is being serviced with appropriate amounts of various resources (e.g. power, bandwidth) to enable the UE to convey adequately information to other users or other system equipment Base station equipment is generally system equipment comprising communication equipment (e.g. radio transmitters, receivers, processing equipment) owned, controlled and operated by system providers.

A UE receives information from a base station equipment over a downlink and transmits information to a base station equipment over an uplink. The uplink comprises at least one traffic channel and at least one signalling channel. Similarly, the downlink comprises at least one signalling channel and at least one traffic channel. The traffic channel is a communication channel over which user information or traffic information (e.g. voice, video, data) is conveyed between UEs and system equipment of the communication system. The signalling channels are communication channels used by the system to manage, and otherwise control the operation of communication channels of the communication system.

Related art is described e.g. in US 6 385 454, describing the prediction of a mobile units future movement for reserving resources in advance, and in WO 03/088702, describing scheduling of data transmissions from a base station to a user equipment for non-real time users and for real time users.

Investigations have shown that the system capacity can be significantly increased with HSPA in comparison to DCH. However, a problem with HSDPA is that it does not support soft handover. Soft handover has been introduced in the CDMA digital cellular standard. Due to the properties of the CDMA signalling scheme, it is possible for a CDMA subscriber station, i.e. a UE, to simultaneously receive signals from two or more base stations that are transmitting the same bit stream on the same channel. If the signal power from two or more base stations is nearly the same, the UE may combine the received signals in such a way the bit stream is decoded in a more reliable way than if only one base station were transmitting. If any one of these signals fades significantly, there will be a relatively high probability of having adequate signal strength from one of the other base stations. Furthermore, during a handover between base stations all data buffered in old base stations is lost. This in contrast to DHC bearers, which support soft handovers that do not lead to packet loss. The effect of packet loss is that handovers between cells is experienced as interruptions in the speech communication. The interruptions can be as long as 160 ms or even longer. If the handovers occur frequently, this may be very annoying and may, hence, have an negative impact on the perceived interactivity in the user communications.

A solution to this problem, i.e. to reduce the impact of the HSDPA handover on speech quality, may be to reduce the amount of data buffered in the base station. However, this can only be perform to a limited extent since some buffering in the base station always is needed in order to benefit from the high available bit rates when utilizing HSPA.

Thus, there is a need for an improved method that provides for a reduction of the impact of the handover on speech quality in wireless data networks supporting HSDPA, such as UMTS (WCDMA), and in wireless data networks such as CDMA2000, hence, enhances the perceived interactivity in user communications.

### Brief description of the invention

An object of the present invention is to provide an improved method, a radio network controller, a user equipment and mobile communication system that reduce the impact of the handover on speech quality in wireless data networks such as CDMA 2000 and in systems supporting HSDPA, such as UMTS (WCDMA), and, hence, enhance the perceived interactivity in user communications.

Another object of the present invention is to provide an improved scheduling handling in wireless data networks such as CDMA2000, and in wireless data networks supporting HSDPA, such as UMTS (WCDMA) to enhance perceived interactivity in user communications.

A further object of the invention is to provide a method, a radio network controller, a user equipment and mobile communication system that minimize the negative impact from interruptions in the data traffic during data transmissions such as VoIP service transmissions caused by packet loss at handovers in wireless communications systems supporting HSDPA, for example, WCDMA networks, and in wireless data networks such as CDMA 2000.

Yet another object of the present invention is to provide a method, a radio network controller, a user equipment and mobile communication system for data transmissions such as VoIP service transmissions in wireless communications systems in wireless data networks such as CDMA 2000 and in systems supporting HSDPA, such as UMTS (WCDMA), that keep the system capacity as high as possible with minimal negative impact from handover interruptions for high mobility users.

Another object of the present invention is to provide method, a radio network controller, an user equipment and a mobile communication system that reduce the impact of the handover on speech quality in wireless data networks such as CDMA2000 using HDR (High Data Rate) and, hence, enhances the perceived interactivity in user communications. A HDR system is optimized for packet data services, with a flexible architecture based on IP protocols. HDR can overlay an existing wireless network or work as a stand-alone system. HDR, known as TIA/EIA/IS-856 "CDMA2000, High Rate Packet Data Air Interface Specification" is also known as 1xEV.

At least some of these objects and other objects are achieved according to the present invention by a method, a radio network controller, and mobile communication system having the features defined in the independent claims. Preferred embodiments are defined in the dependent claims.

In the context of the present invention, the term "VoIP services" relates to services that provide audio using the IP protocol for transport the media. Example services are MMTel (MultiMedia Telephony) services, Push to talk over Cellular (PoC), or VoIP with video and/or images and services related to music. Moreover, the term "application server" relates to a server handling such services.

According to a first aspect of the invention, there is provided a method for scheduling data transmission to a user equipment in a communication system comprising at least one radio network controller (RNC) governing a number of base stations, wherein the communication system supports data transmission from a base station to an user equipment on a high speed packet access (HSPA) bearer or a dedicated channel (DHC) or on similar or corresponding bearers in a CDMA2000 system. The method comprises the steps of identifying predetermined scheduling conditions for data transmissions for the user equipment; determining current scheduling conditions of the user equipment; comparing the predetermined scheduling conditions of the user equipment with the current conditions of the user equipment; selecting a high speed packet access (HSPA) bearer or a dedicated channel (DHC) or similar bearers in a CDMA2000 system for the data transmissions during a session from a base station based on the comparison; and using the selected data bearer during the data transmission session or until a new data bearer has been selected.

According to a second aspect of the present invention, there is provided a radio network controller (RNC) in a communication system governing a number of base stations, wherein the communication system supports data transmission from a base station to an user equipment on a high speed packet access (HSPA) bearer or a dedicated channel (DHC) or on similar or corresponding bearers in a CDMA2000 system, the RNC being adapted to schedule data transmissions to a user equipment. The controller comprises: identifying means adapted to identify at least one predetermined scheduling condition for data transmissions for the user equipment; determining means adapted to determine at least one current scheduling condition of the user equipment; comparator means adapted to compare the predetermined scheduling conditions of the user equipment with the current conditions of the user equipment; scheduling selecting means adapted to select a high speed packet access (HSPA) bearer or a dedicated channel (DHC) or similar bearers in a CDMA2000 system for the data transmissions during a session from a base station based on the comparison, wherein the selected data bearer is used during the data transmission session or until a new data bearer has been selected.

According to a third aspect of the present invention, there is provided a mobile communication system comprising at least one radio network controller (RNC) governing a number of base stations, wherein the communication system supports data transmission from a base station to an user equipment on a high speed packet access (HSPA) bearer or a dedicated channel (DHC) or on similar or corresponding bearers in a CDMA2000 system, the RNC being adapted to schedule a user equipment in a data transmission in the network. The controller is adapted to identify at least one predetermined scheduling condition for data transmissions for the user equipment; determine at least one current scheduling conditions of the user equipment; compare the predetermined scheduling conditions of the user equipment with the current conditions of the user equipment; select a high speed packet access (HSPA) bearer or a dedicated channel (DHC) or similar bearers in a CDMA2000 system for the data transmissions during a session from a base station based on the comparison; and use the selected data bearer during the data transmission session or until a new data bearer has been selected.

According to fourth aspect of the present invention, there is provided a user equipment for use in a communication system comprising at least one radio network controller (RNC) governing a number of base stations, wherein the communication system supports data transmission from a base station to an user equipment on a high speed packet access (HSPA) bearer or a dedicated channel (DHC) or on similar or corresponding bearers in a CDMA2000 system. The user equipment comprises identifying means adapted to identify at least one predetermined scheduling condition for data transmissions; determining means adapted to determine at least one current scheduling condition of the user equipment; comparing means adapted to compare the predetermined scheduling conditions of the user equipment with the current conditions of the user equipment; and means for communicating the comparison to the RNC.

According to fifth aspect of the present invention, there is provided a user equipment for use in a communication system comprising at least one radio network controller (RNC) governing a number of base stations, wherein the communication system supports data transmission from a base station to an user equipment on a high speed packet access (HSPA) bearer or a dedicated channel (DHC) or on similar or corresponding bearers in a CDMA2000 system. The user equipment comprises determining means adapted to determine at least one current scheduling condition of the user equipment; and means for communicating the at least one current scheduling condition of the user equipment to the RNC.

According to a further aspect of the invention there is provided a computer readable medium comprising instructions for bringing a programmable device to perform steps of the method according to the first aspect of the invention.

The present invention is hence based on the idea of actively selecting a HSPA data bearer or a dedicated channel (DHC) for a data transmission or a similar or corresponding data bearer in a CDMA2000 system, e.g. a VoIP service data transmission, to a user equipment based on a comparison between at least one predetermined scheduling condition and current scheduling conditions, which conditions may include type of traffic flow, mobility of user equipment, system load, etc. In other words, a scheduling decision is made for a specific user equipment on basis of the comparison. Thereby, there is possible to select a data bearer that minimizes the risk for undesired interruptions during data transmission, such as VoIP service data transmissions, and, thus, the perceived interactivity in user communications can be enhanced at the same time as system capacity is maximized.

According to an embodiment, the at least one predetermined scheduling condition is a predetermined mobility threshold of the user equipment and the step of determining the current scheduling conditions of the user equipment comprises the step of determining the mobility of the user equipment. A HSDPA bearer is selected if an current mobility of the user equipment is determined to be below the threshold and a DCH bearer is selected if the current mobility is determined to be above the threshold. Thereby, it is possible to select data bearer on basis of the mobility of a specific user. The threshold can be set such that a given number of users (or sessions) are scheduled to use DCH bearers if their mobility is high. The threshold can, for example, be set for a specific user equipment or for a group of users. As the number of DCH users is kept controlled by means of the threshold, the system capacity can be kept as high as possible with a minimal negative impact from handover interruptions for high mobility users which are scheduled to HSPA bearers.

Upon setting the threshold, the insight that the probability density of mobile users in a system is distributed such that there is a high density at relatively low mobilities, e.g. users that are walking or are in an office, and a high density at relatively high mobilities, e.g. user who are travelling by car or by train, is used. That is, the threshold can be set such that users with a relatively low mobility are scheduled to a HSDPA bearer and user who are travelling by car or by train are scheduled to a DCH bearer. User who are travelling at a low velocity, i.e. walking, will experience a low handover frequency and will thus not encounter interruptions especially often. On the other hand, user with a high mobility are scheduled to the less capacity efficient DCH bearers. These user would otherwise, if they were scheduled to a HSDPA bearer, experience handover quite often, which may be very annoying. Hence, a high degree of perceived interactivity in user communications can be obtained for high mobility users at the same time as system capacity can be kept as high as possible.

In a further embodiment of the present invention, the predetermined mobility threshold is an adjustable mobility threshold. The threshold for a specific user or for a group of users can be changed or adjusted depending of the system load and/or operator preferences. If for instance the system load is very high it may be desirable to move the threshold to a high value, i.e. to a high mobility, in order to maximize system capacity. As the numbers of DCH users is kept controlled by means of the adjustable threshold, the system capacity is kept as high as possible with minimal negative impact from handover interruptions for high mobility users.

According to a further embodiment of the present invention, the current scheduling conditions of the user equipment are continuously checked during the session in order to identify whether the current conditions has changed and if the conditions has changed and the updated conditions is compared with the predetermined scheduling conditions. If the comparison between the updated conditions and the predetermined scheduling conditions indicates that the selected data bearer should be changed; a new data bearer for the data transmissions is selected based on the comparison between the updated conditions with the predetermined scheduling conditions. Consequently, the allocation of data bearer is dynamic, that is the scheduling (i.e. the selection of a HSDPA or a DCH bearer) is performed during the session by continuously monitoring the current scheduling conditions i.e. the current mobility of the user. Thereby, it is possible to account for the current load in the visited cell.

As realized by the person skilled in the art, the methods of the present invention, as well as preferred embodiments thereof, are suitable to realize as a computer program or a computer readable medium.

The features that characterize the invention, both as to organization and to method of operation, together with further objects and advantages thereof, will be better understood from the following description used in conjunction with the accompanying drawings. It is to be expressly understood that the drawings is for the purpose of illustration and description and is not intended as a definition of the limits of the invention. These and other objects attained, and advantages offered, by the present invention will become more fully apparent as the description that now follows is read in conjunction with the accompanying drawings.

### Brief description of the drawings

Above-mentioned and other features and advantages of the present invention will be apparent from the following detailed description of preferred embodiments, merely exemplifying, in conjunction with the attached drawing, wherein:
- Fig. 1: is a schematic view of a generic telecommunication system in which the present invention can be employed;
- Fig. 2: is a schematic diagram showing the steps performed during a VoIP service data transmission using a HSDPA bearer;
- Fig. 3: is a schematic diagram illustrating a probability density function of mobile users of a communication system, where user density is plotted as a function of mobility;
- Fig. 4a: is a schematic diagram showing the steps performed in accordance with main principles of the present invention;
- Fig. 4b: is a schematic diagram showing the steps performed in accordance with an embodiment of the present invention;
- Fig. 5: is a schematic diagram illustrating a probability density function of mobile users of a communication system and a scheduling condition implemented as a mobility threshold, where user density is plotted as a function of mobility; and
- Fig. 6: is an example embodiment of a radio network controller according to the present invention.
- Fig. 7: is a first embodiment of an user equipment according to the present invention.
- Fig. 8: is a second embodiment of an user equipment according to the present invention.

### Description of preferred embodiments

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well-known devices, circuits, and methods are omitted so as not to obscure the description of the present invention with unnecessary details. Moreover, individual function blocks are shown in some of the figures. Those skilled in the art will appreciate that the functions may be implemented using individual hardware circuits, using software functioning in conjunction with a suitably programmed digital microprocessor or general purpose computer, using an application specific integrated circuit (ASIC), and/or using one or more digital signal processors (DSPs).

It should be noted that, even if the description hereinafter mainly is directed at a UMTS system and data bearer in such a system, the invention is applicable in a CDMA2000 system and on data bearers for such a system to reduce the impact of the handover on speech quality in CDMA2000 using HDR (High Data Rate) and, hence, enhance the perceived interactivity in user communications. A HDR system is optimized for packet data services, with a flexible architecture based on IP protocols. HDR can overlay an existing wireless network or work as a stand-alone system. HDR, known as TIA/EIA/IS-856 "CDMA2000, High Rate Packet Data Air Interface Specification" is also known as 1xEV.

Moreover, the invention is applicable in communication between an user equipment in a UMTS system or in a CDMA2000 system and other user equipments, PSTN phones, etc.

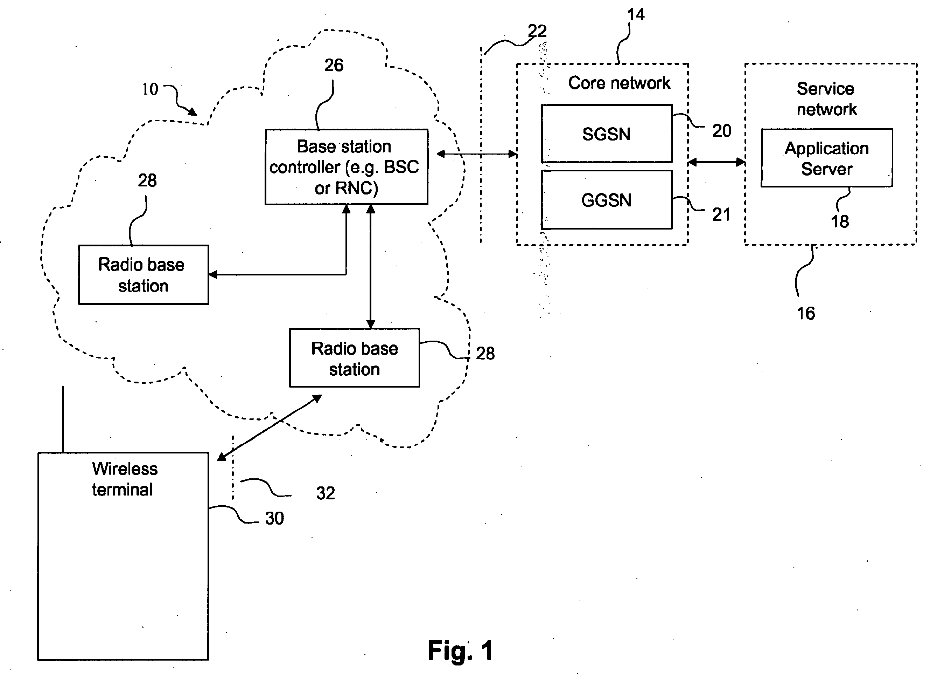

Fig. 1 illustrates a generic telecommunications system as an example context in which the present invention may be employed. The first example system includes both a radio access network 10 and a core network 14. The core network 14 is shown as being connected to a service node or service network 16. The service network 16 (or other comparable entity) includes an application server 18, such as a, for example, a SIP-based PoC Server.

In one specific example implementation, the core network 14 is a connectionless external core network and comprises Serving GPRS Support Node (SGSN) 20 and Gateway GRPS support node (GGSN) 21. The General Packet Radio Service (GPRS) Service (SGSN) node 20 is tailored to provide packet-switched type services. The Gateway GRPS support node (GGSN) 21 provides the interface towards the packet-switched networks (e.g., the Internet, X.25 external networks). The Gateway GRPS support node (GGSN) 21 translates data formats, signalling protocols and address information in order to permit communication between the different networks. Serving GPRS Support Node (SGSN) 20 provides packet routing to and from a SGSN service area, and serves GPRS suscribers which are physically located within the SGSN service area. Serving GPRS Support Node (SGSN) 20 provides functions such as authentication, ciphering, mobility management, charging data, and logical link management toward the user equipment unit. A GPRS subscriber may be served by any SGSN in the network depending on location. The functionality of Serving GPRS Support Node (SGSN) 20 and Gateway GRPS support node (GGSN) 21 may be combined in the same node, or may exist in separate nodes as shown in Fig. 1.

The core network 14 connects to radio access network 10 over a radio access network interface depicted by dot-dashed line 22. The radio access network 10 includes one or more control nodes 26 and one or more radio base stations (BS) 28. In an example, non-limiting implementation in which radio access network 10 is a UMTS Terrestrial Radio Access Network (UTRAN), the radio access network interface depicted by dot-dashed line 22 is known as the Iu interface, and the control nodes 26 take the form of radio network controllers (RNCs). In other implementations of radio access network 10, the control nodes 26 can have other names, such as base station controller (BSC), for example. In any event, it should be understood that, for sake of simplicity, the radio access network 10 of Fig. 1 is shown with only one control node 26, with the control node 26 being connected to two base stations (BS) 28. As understood by those skilled in the art, the radio access network 10 typically has numerous control nodes 26, which can be connected over an unillustrated interface (such as an Iur interface). Again for sake of simplicity, only two base station nodes 28 are shown connected to the representative control node 26. It will be appreciated that a different number of base stations 28 can be served by each control node 26, and that control nodes 26 need not serve the same number of base stations. Further, those skilled in the art will also appreciate that a base station is sometimes also referred to in the art as a radio base station, a node B, or B-node.

For brevity it is assumed in the ensuing discussion that each base station 28 serves one cell. It will be appreciated by those skilled in the art, however, that a base station may serve for communicating across the air interface for more than one cell. For example, two cells may utilize resources situated at the same base station site. Moreover, each cell may be divided into one or more sectors, with each sector having one or more cell/carriers.

A wireless terminal 30 communicates with one or more cells or one or more base stations (BS) 28 over a radio or air interface 32. In differing implementations, the wireless terminal 30 can be known by different names, such as mobile station or MS, mobile terminal or MT, or user equipment unit (UE), for example. Of course, whereas for ease of illustration only one wireless terminal 30 is shown in Fig. 1, each base station typically serves many wireless terminals.

In the example UMTS implementation mentioned above, radio access is preferably based upon Wideband, Code Division Multiple Access (WCDMA) with individual radio channels allocated using CDMA spreading codes. Of course, other access methods may be employed.

In such a W-CDMA communication system in conformity with 3GPP (3^{rd} Generation Partnership Project) now being standardized, HSDPA may be used to realize high-speed downlink. In a HSDPA method, as a physical channel for a downlink through which data are transmitted from a base station to a user equipment, an HS-SCCH (High Speed - Shared Control CHannel) and an HS - PDSCH (High Speed - Physical Downlink Shared CHannel) are additionally provided. The HS-SCCH is used to transmit control information of the HS - PDSCH pairing up with HS-SCCH, while the HS - PDSCH is used to transmit packet data employd in the HSDPA method. In addition, the communication system supports the use of traditional dedicated channels (DCH).

It is believed that the system capacity can be significantly increased with HSPA in comparison to DCH, approximately the capacity increase using HSPA can be as large as 100 percent. However, a problem with HSDPA is, as outlined above, that it does not support soft handover. This in contrast to DHC bearers, which support soft handovers that do not lead to packet loss. The effect of packet loss is that handovers between cells is experienced as interruptions in the speech communication. If the handovers occur frequently, this may be very annoying and may, hence, have an negative impact on the perceived interactivity in the user communications. Radio network simulations have shown that the current delay in the transmission may be can be as long as 160 ms or even longer. This delay time depends, for example, strongly on the user velocity in that users with a high velocity encounter handover interruptions that are longer and occur more frequently.

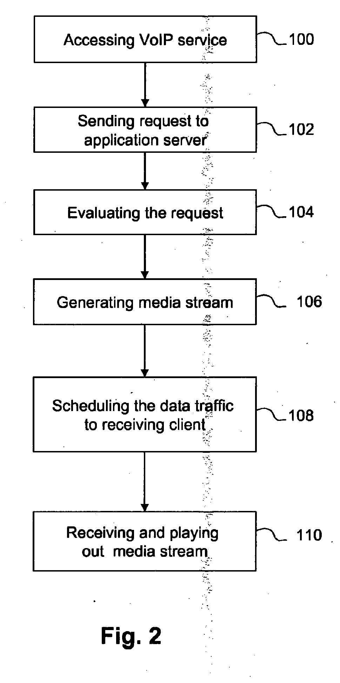

With reference now to Fig. 2, the steps involved in communication over a HSPA bearer between users of user equipments using a VoIP service, such as a MMTel serive or a PoC service will be described. It should be noted that this is only an example and there are of course other services that may be communicated over a HSPA bearer and thus may encounter interruptions due to soft handover. In this example, for the sake of simplicity, only two users are discussed but the skilled man in the art realizes that the services can be used for communication between one user and an arbitrary number of users. User A wishes to communicate a message to user B. First, at step 100, user A accesses the desired VoIP service, for example, by pressing a VoIP service button on his user equipment or VoIP service client, for example, a mobile phone. Then, at step 102, the VoIP service client sends a request to the application server 18, see Fig. 1, asking for permission to generate data to be sent. Subsequently, at step 104, the application server decides if it should grant or reject the request and sends either an accept signal or a reject signal back to client A. Upon receiving the accept signal, at step 106, client A is arranged to indicate for User A that he or she is allowed to generate the signals to be sent. The indication may, for example, be a visual or audible signal. The signal is encoded and ordered in packets before transmission. Thereafter, the packets, from client A, are transmitted over the air interface 22, to the base station 28 of the cell in which the user B is in. The radio network controller 26 governing the base station 28 schedules, at step 108, the transmission of the packets to a HSDPA bearer for the downlink traffic to user B. Then, at step 110, client B starts, upon receiving the packets, the decoder processing of the received speech frames of the received packets and the decoded speech frames are played out to User B by the loudspeaker in client B.

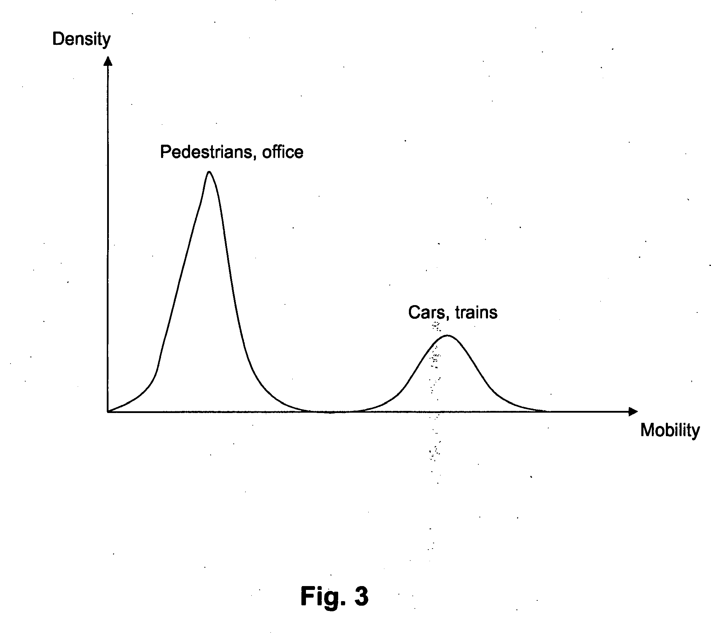

As discussed above, as HSDPA does not support soft handover, interruptions of the data traffic in the downlink may occur depending on the travelling velocity of user B. These interruptions will be more common and will have a longer duration the higher the travelling velocity of user B becomes since the handover frequency, or the mobility, increases. The probability density function of the mobile users in a system, for example, the system 10 in Fig. 1 may look like Fig. 3 in which the user density as a function of mobility is illustrated. As can be seen, there is a large number of users that are more or less stationary or travelling at a low velocity, e.g. walking. These user will likely not be affected of interruptions due to soft handover since they probably , not will travel from one cell to another and if they do so, it will occur seldom. Hence, the potential or possible interruptions will not be too annoying for these users. On the other hand, there is also a large number of users travelling at a relatively high speed by, for example, car or train, which entails that the mobility of these user will be high. These users will encounter interruptions due to packet loss in the speech communication on a frequent basis. The interruptions may be as long as 160 ms or, in certain cases, even longer. In fact, it may be up to 500 ms. This may be experienced as very annoying if the interruptions occur often.

The invention is based on that the individual VoIP services are scheduled to use either HSPA or DCH depending on the mobility of the users. Users who experience a high handover frequency are scheduled to use DCH bearers, while users, in the low handover frequency case, will be scheduled to use HSPA bearers. However, as mentioned above, the invention is equally applicable in a CDMA2000 system for data bearers in such a system.

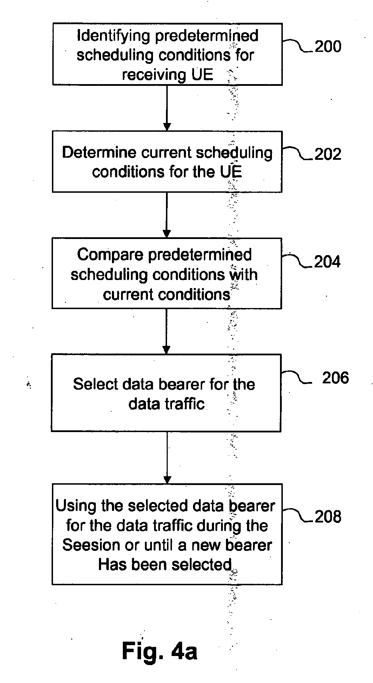

Turning now to Fig. 4a, the main principles of the method according to the present invention will be described. The method for scheduling a data transmission to a user equipment arranged to communicate with at least a second user using, for example, a second equipment or a PSTN phone may be implemented in a communication system as described with reference to Fig. 1. The scheduling of the usage of either HSDPA or DCH bearers can be performed according to following principle methods:
1. Session Description Protocol (SDP) setup: The decision is made at session setup. The mobility of a specific UE may be stored in a RNC or the UE may report the mobility at setup.
2. Dynamic allocation: The scheduling (HSDPA or DCH) is performed during the session.

According to an embodiment of the present invention, the following steps are performed in order to schedule a data transmission, for example, a VoIP service. In general, the steps involved in communication over a data bearer between users of user equipments using a VoIP service, such as a MMTel service, a PoC service or a PoC VGM (Video Group Message) service is performed in accordance with the steps 100-106 described with reference to Fig. 2.

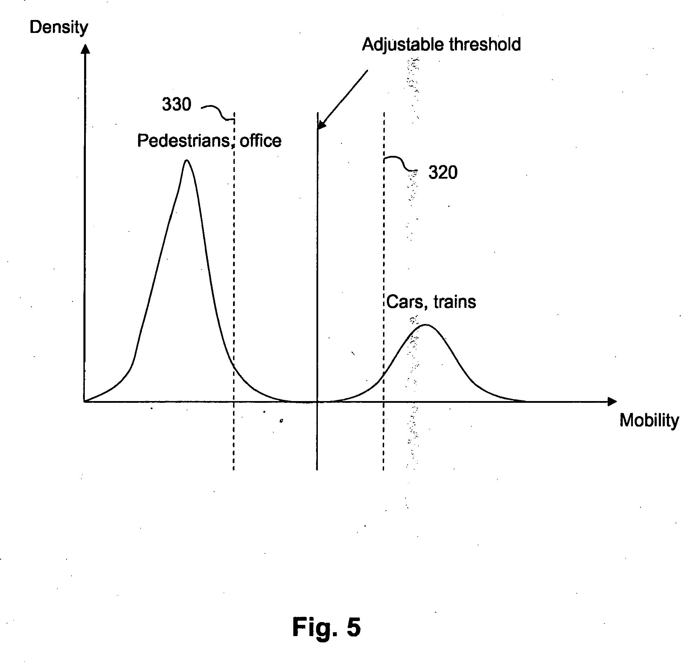

Now, the steps specific for the present invention will be described. For example, the following steps may be performed as an alternative to step 108 or at SDP setup. First, at step 200, at least one predetermined scheduling condition for data transmissions to a receiving UE is identified. This step may be performed at setup. Preferably, this at least one condition comprises the mobility of the UE and can be implemented as a mobility threshold as shown in Fig. 5. Preferably, a HSDPA bearer is selected if an current mobility of the receiving UE is determined to be below the threshold and a DCH bearer is selected if the current mobility is determined to be above the threshold. In one embodiment of the present invention, the threshold is adjustable, as indicated in Fig. 5. Thereby, the threshold can be adjusted depending on system load and/or operator preferences. For example, if the system load is very high, it may be desirable to move the threshold to a very high mobility value, as indicated by reference numeral 320, in order to maximize the system capacity even though the HSPA handovers may become annoying. If the load is low, the threshold may be moved to a low value, as indicated by reference numeral 330. Then, at step 202, at least one current scheduling condition of the UE is determined, which preferably includes determining the current mobility of the UE. This may be performed at set up and the mobility of the specific UE may be stored in the RNC or the UE may report the mobility at setup. Alternatively, this can be performed continuously, i.e. dynamic allocation. Thereafter, at step 204, the predetermined scheduling conditions of the UE is compared with the current conditions of the UE, i.e. the predetermined mobility threshold is compared with the current mobility of the UE. Subsequently, at step 206, a high speed packet access (HSPA) bearer or a dedicated channel (DHC) for the data transmissions during the session based on the comparison is selected. A HSDPA bearer is selected if the current mobility of the receiving UE is determined to be below the predetermined threshold and a DCH bearer is selected if the current mobility is determined to be above the threshold. At step 208, the selected data bearer is used during the data transmission session or until a new data bearer has been selected if the allocation is dynamic. In an alternative embodiment of the present invention, all steps are performed in the scheduling step 108 described with reference to Fig. 2.

The mobility of users can be devised in number of ways. A first way is to determine the handover frequency of the UE, i.e. the number of handovers per time unit. Another way is to determine a Doppler shift of the carrier frequency, which gives an estimate of the UE speed with respect to one or several base stations. A third way is to use positioning data, for example, by means of a GPS receiver in the UE, to determine a velocity relatively one or several base stations.

According to an embodiment, the scheduling conditions also include the type of traffic flow. In this case, the scheduling can be executed in the following way. If for instance the traffic flow is non realtime webtraffic it is possible that an UE is allowed to use HSDPA bearers even though the mobility is above the threshold. If the traffic flow is low latency streaming video or audio, or even VoIP, it is likely that the number of handovers become annoying and that may therefore be better to allocate DCH bearers for this traffic flow. Other conditions that can be used is, for example, Quality of Service (QoS).

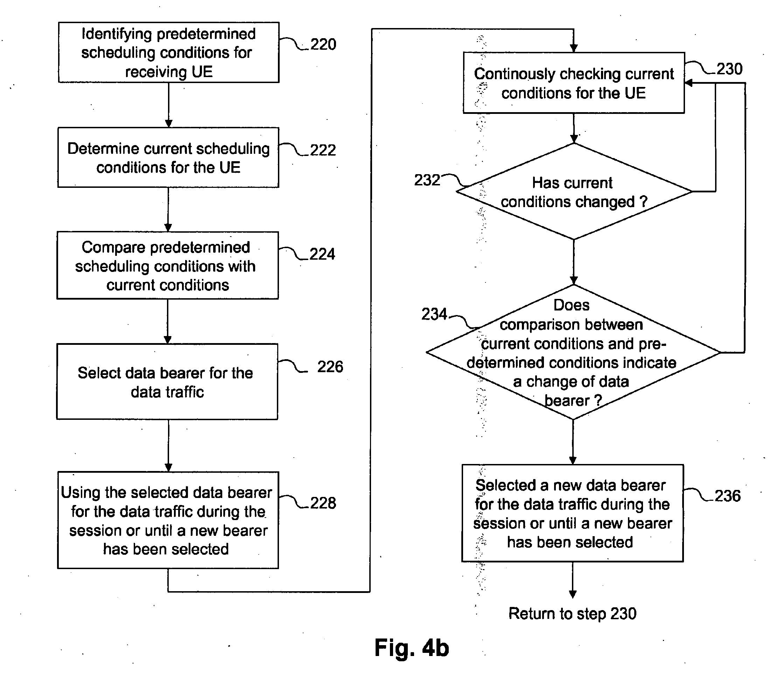

With reference to Fig. 4b, an embodiment of the present invention will be described. The method for scheduling a data transmission to a user equipment in a communication system as described with reference to Fig. 1. As mentioned above, the scheduling of the usage of either HSDPA or DCH bearers can be performed dynamically and the following steps are performed in order to schedule a data transmission, for example, a VoIP service. In general, the steps involved in communication over a data bearer between users of user equipments using a VoIP service, such as a PoC service or a PoC VGM (Video Group Message) service is performed in accordance with the steps 100-106 described with reference to Fig. 2.

Now, the steps specific for an embodiment realizing a dynamic approach will be described. First, at step 220, at least one predetermined scheduling condition for data transmissions to a receiving UE is identified. This step may be performed at setup. Preferably, this at least one condition comprises the mobility of the UE and can be implemented as a mobility threshold as shown in Fig. 5. Preferably, a HSDPA bearer is selected if an current mobility of the receiving UE is determined to be below the threshold and a DCH bearer is selected if the current mobility is determined to be above the threshold. In one embodiment of the present invention, the threshold is adjustable, as indicated in Fig. 5. Thereby, the threshold can be adjusted depending on system load and/or operator preferences. For example, if the system load is very high, it may be desirable to move the threshold to a very high mobility value, as indicated by reference numeral 320, in order to maximize the system capacity even though the HSPA handovers may become annoying. If the load is low, the threshold may be moved to a low value, as indicated by reference numeral 330. Then, at step 222, at least one current scheduling condition of the UE is determined, which preferably includes determining the current mobility of the UE. Thereafter, at step 224, the predetermined scheduling conditions of the UE is compared with the current conditions of the UE, i.e. the predetermined mobility threshold is compared with the current mobility of the UE. Subsequently, at step 226, a high speed packet access (HSPA) bearer or a dedicated channel (DHC) for the data transmissions during the session based on the comparison is selected. A HSDPA bearer is selected if the current mobility of the receiving UE is determined to be below the predetermined threshold and a DCH bearer is selected if the current mobility is determined to be above the threshold. At step 228, the selected data bearer is used during the data transmission session or until a new data bearer has been selected. In an alternative embodiment of the present invention, all steps are performed in the scheduling step 108 described with reference to Fig. 2. At step 230 the current conditions of the user equipment are checked continuously during the session and it checked whether the current conditions has changed. If the conditions has changed, in step 232, the updated conditions are compared with the predetermined scheduling conditions and it is checked whether the selected data bearer should be changed. That is, if the current mobility of the UE has, for example, increased such that it exceeds the predetermined threshold thus indicating that the data bearer should be changed from a HSDPA bearer to a DCH bearer. Then, in step 234, the new data bearer for the data transmissions based on the comparison between the updated conditions with the predetermined scheduling conditions is selected. The procedure then return to step 230.

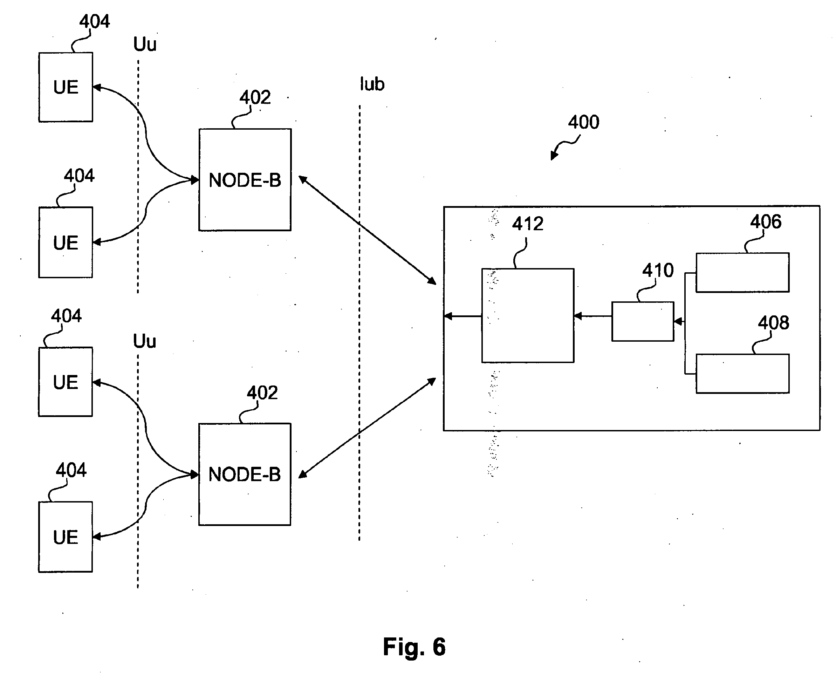

Turning now to Fig. 6, an example RNC according to the present invention will be described. As briefly mentioned above, the main functions of the RNC are management of radio channels on the interfaces between UE and node-B (base station) Uu. Radio resource management includes the following: outer loop power control, load control, admission control, packet scheduling, handover control, security functions and mobility management. According to an embodiment, the radio network controller (RNC) 400 governing a number of base stations 402 in a communication system (for example the system in Fig. 1), wherein the communication system supports data transmission from a base station to an user equipment on a high speed packet access (HSPA) bearer or a dedicated channel (DHC), is adapted to schedule data transmissions to an UE 404 arranged to communicate with at least a second UE 404. The RNC 400 comprises: identifying means 406 adapted to identify at least one predetermined scheduling condition for data transmissions to the UE 404; determining means 408 adapted to determine at least one current scheduling condition of the UE 404; comparator means 410 adapted to compare the predetermined scheduling conditions of the UE 404 with the current conditions of the UE 404; scheduling selecting means 412 adapted to select a high speed packet access (HSPA) bearer or a dedicated channel (DHC) for the data transmissions during a session from a base station based on the comparison, wherein the selected data bearer is used during the data transmission session or until a new data bearer has been selected.

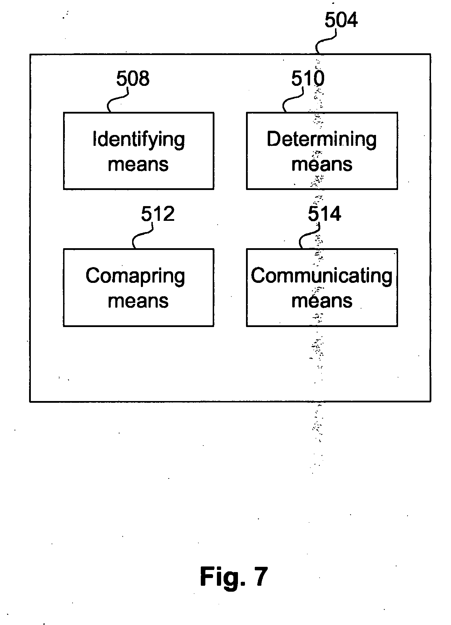

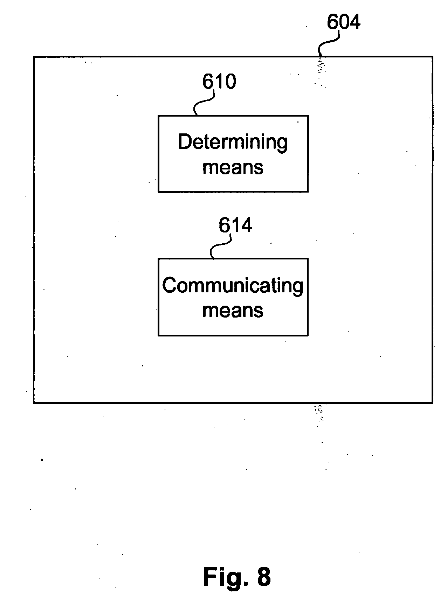

With reference to Fig. 7 and 8, embodiments of the present invention a user equipment for use in a communication system comprising at least one radio network controller (RNC) according to the invention, for example, the system and RNC described above governing a number of base stations, wherein the communication system supports data transmission from a base station to an user equipment on a high speed packet access (HSPA) bearer or a dedicated channel (DHC) or on similar bearers in a CDMA2000 system will be described. The function and parts of a user equipment for use in a UMTS or CDMA200 system are well known for the man skilled in the art and therefore description of these will be omitted and only part relevant for the invention will be described. The user equipment 504 comprises identifying means 508 adapted to identify at least one predetermined scheduling condition for data transmissions for the user equipment; determining means 510 adapted to determine at least one current scheduling condition of the user equipment; comparing means 512 adapted to compare the predetermined scheduling conditions of the user equipment with the current conditions of the user equipment; and means for communicating 514 the comparison to the RNC.

In an alternative embodiment, the user equipment 604 comprises determining means 610 adapted to determine at least one current scheduling condition of the user equipment; and means for communicating 614 the at least one current scheduling condition of the user equipment to the RNC.

Although specific embodiments have been shown and described herein for purposes of illustration and exemplification, it is understood by those of ordinary skill in the art that the specific embodiments shown and described may be substituted for a wide variety of alternative and/or equivalent implementations without departing from the scope of the invention. Those of ordinary skill in the art will readily appreciate that the present invention could be implemented in a wide variety of embodiments, including hardware and software implementations, or combinations thereof. As an example, many of the functions described above may be obtained and carried out by suitable software comprised in a micro-chip or the like data carrier. This application is intended to cover any adaptations or variations of the preferred embodiments discussed herein. Consequently, the present invention is defined by the wording of the appended claims and the invention is not to be regarded as limited to only the structural or functional element described in the embodiments, but to the attached claims.

## Claims

1. Method for scheduling a data transmission to a user equipment (404) in a communication system comprising at least one radio network controller, RNC, (400) governing a number of base stations (402) , wherein the communication system supports data transmission from a base station to a user equipment on a high speed packet access, HSPA, bearer or a dedicated channel, DCH, said method being **characterized by** the steps of:
identifying (200) at least one predetermined scheduling condition for data transmissions for said user equipment;
determining (202) at least one current scheduling conditions of said user equipment;
comparing (204) said predetermined scheduling conditions of said user equipment with said current conditions of said user equipment;
selecting (206) a high speed packet access, HSPA, bearer or a dedicated channel, DCH, for the data transmissions during a session from a base station based on said comparison; and
using (208) said selected data bearer during the data transmission session or until a new data bearer has been selected.

2. The method according to claim 1, wherein said at least one predetermined scheduling condition is a mobility threshold of said user equipment and wherein said step of determining the current scheduling conditions of said user equipment comprises the step of determining the mobility of said user equipment and wherein a HSDPA bearer is selected if an current mobility of said user equipment is determined to be below said threshold and a DCH bearer is selected if said current mobility is determined to be above said threshold.

3. The method according to any one of preceding claims, wherein said mobility threshold is an adjustable mobility threshold.

4. The method according to any one of preceding claims 1-3, further comprising the steps of:
continuously checking said current conditions of said user equipment during said session in order to identify whether said current conditions has changed;
if said conditions has changed, comparing said updated conditions with said predetermined scheduling conditions;
if said comparison between said updated conditions and said predetermined scheduling conditions indicates that the selected data bearer should be changed; selecting a new data bearer for the data transmissions based on said comparison between said updated conditions with said predetermined scheduling conditions; and
using said new data bearer for data transmission.

5. The method according to any one of preceding claims 1-4, wherein said step of identifying predetermined scheduling conditions for data transmissions for said user equipment is performed at session description protocol setup.

6. The method according to any one of preceding claims 1-5, wherein the step of determining current scheduling conditions of said user equipment is performed at session description protocol setup.

7. The method according to claim 6, further comprising the step of collecting scheduling condition information for said user equipment in order to determine current scheduling conditions for said user equipment.

8. The method according to claim 7, wherein said scheduling information is collected from said user equipment or from said radio network controller.

9. The method according to any one of preceding claims, wherein said scheduling conditions includes a traffic flow parameter, and the method further comprises the step of checking the type of traffic flow in said session.

10. The method according to claim 9, wherein a HSDPA bearer is selected if said traffic flow parameter indicates that time sensitive data, including video, audio or VoIP, is transmitted in said session and a DCH bearer is selected if said traffic flow parameter indicates that non time sensitive traffic including non real-time traffic is transmitted in said session.

11. A radio network controller, RNC, (400) of a communication system governing a number of base stations, wherein the communication system supports data transmission from a base station (402) to an user equipment (404) on a high speed packet access, HSPA, bearer or a dedicated channel, DCH, said RNC being adapted to schedule data transmissions to a user equipment in said network, **characterized in that** said radio network controller comprises:
identifying means (406) adapted to identify at least one predetermined scheduling condition for data transmissions for said user equipment;
determining means (408) adapted to determine at least one current scheduling condition of said user equipment;
comparator means (410) adapted to compare said predetermined scheduling conditions of said user equipment with said current conditions of said user equipment;
scheduling selecting means (412) adapted to select a high speed packet access, HSPA, bearer or a dedicated channel, DCH, for the data transmissions during a session from a base station based on said comparison, wherein said selected data bearer is used during the data transmission session or until a new data bearer has been selected.

12. A mobile communication system comprising at least one radio network controller, RNC, (400) governing a number of base stations (402), wherein the communication system supports data transmission from a base station to an user equipment on a high speed packet access, HSPA, bearer or a dedicated channel, DCH, said RNC being adapted to schedule a user equipment (404) in a data transmission in said network, **characterized in that** said radio network controller RNC, is adapted to
identify at least one predetermined scheduling condition for data transmissions for said user equipment;
determine at least one current scheduling conditions of said user equipment;
compare said predetermined scheduling conditions of said user equipment with said current conditions of said user equipment;
select a high speed packet access, HSPA, bearer or a dedicated channel, DCH, for the data transmissions during a session from a base station based on said comparison; and use said selected data bearer during the data transmission session or until a new data bearer has been selected.

13. A user equipment (404) adapted to be scheduled by a radio network controller, RNC, (400) in a mobile communication system according to claim 12, said radio network controller, RNC, governing a number of base stations (402) , wherein the communication system supports data transmission from a base station (402) to said user equipment (404) on a high speed packet access, HSPA, bearer or a dedicated channel, DCH, the user equipment **characterized by**
identifying means (508) adapted to identify at least one predetermined scheduling condition for data transmissions for said user equipment;
determining means (510) adapted to determine at least one current scheduling condition of said user equipment;
comparing means (512) adapted to compare said predetermined scheduling conditions of said user equipment with said current conditions of said user equipment; and
means for communicating (514) said comparison to said radio network controller RNC, for the RNC to select a high speed packet access, HSPA, bearer or a dedicated channel, DCH, for the data transmissions during a session from a base station based on said comparison.

14. The user equipment according to claim 13, wherein said at least one predetermined scheduling condition is a mobility threshold of said user equipment and wherein user equipment comprises means for determining the mobility of said user equipment.

15. The user equipment according to any one of preceding claims 13-14, wherein said mobility threshold is an adjustable mobility threshold.

16. The user equipment according to any one of preceding claims 13-15, further comprising:
means for continuously checking said current conditions of said user equipment during said session in order to identify whether said current conditions has changed; and
wherein said comparing means is adapted to, if said conditions has changed, compare said updated conditions with said predetermined scheduling conditions.

17. The user equipment according to any one of preceding claims 13-16, wherein the predetermined scheduling conditions for data transmissions for said user equipment is identified at session description protocol setup.

18. The user equipment according to any one of preceding claims 13-17, wherein the current scheduling conditions of said user equipment is determined at session description protocol setup.

19. The user equipment according to any one of preceding claims 13-18, wherein said determining means is adapted to determine the mobility of said user equipment by determining a number of handovers per time unit for said user equipment.

20. The user equipment according to any one of preceding claims 13-18, wherein said determining means is adapted to determine the mobility of said user equipment by calculating a Doppler shift of a carrier frequency of said user equipment in order to estimate a speed of said user equipment with respect of one ore several base stations.

21. The user equipment according to any one of preceding claims 13-18, further comprising a GPS receiver and wherein said determining means is adapted to determine the mobility of said user equipment by determining a position of said user equipment at regular intervals using positioning information obtained from a position system via said GPS receiver.

22. The user equipment according to any one of preceding claims 13-18, wherein said scheduling conditions includes a traffic flow parameter, and said determining means is adapted to check the type of traffic flow in said session.

23. A computer readable medium comprising instructions for bringing a programmable device to perform steps of the method according to any one of claims 1-10.

## Patentansprüche

1. Verfahren zur Zeitplansteuerung einer Datenübertragung an eine Teilnehmereinrichtung (404) in einem Kommunikationssystem, umfassend zumindest einen Funknetzwerk-Controller, RNC, (400) der eine Anzahl von Basisstationen (402) steuert, wobei das Kommunikationssystem eine Datenübertragung von einer Basisstation an eine Teilnehmereinrichtung auf einem Hochgeschwindigkeitspaketzugriffsträger, HSPA-Träger, oder einem festgeschalteten Kanal, DCH, unterstützt, wobei das Verfahren **gekennzeichnet ist durch** die folgenden Schritte:
Erkennen (200) zumindest eines vorbestimmten Zeitplansteuerungszustands für Datenübertragungen für die Teilnehmereinrichtung;
Bestimmen (202) zumindest eines aktuellen Zeitplansteuerungszustands der Teilnehmereinrichtung;
Vergleichen (204) der vorbestimmten Zeitplansteuerungszustände der Teilnehmereinrichtung mit den aktuellen Zuständen der Teilnehmereinrichtung;
Auswählen (206) eines schnellen Hochgeschwindigkeitspaketzugriffsträgers, HSPA-Trägers, oder eines festgeschalteten Kanals, DCH, für die Datenübertragungen während einer Sitzung von einer Basisstation auf der Grundlage des Vergleichs; und
Verwenden (208) des ausgewählten Datenträgers während der Datenübertragungssitzung oder bis ein neuer Datenträger ausgewählt worden ist.

2. Verfahren nach Anspruch 1, wobei der zumindest eine vorbestimmte Zeitplansteuerungszustand ein Mobilitätsschwellwert der Teilnehmereinrichtung ist und wobei der Schritt zur Bestimmung der aktuellen Zeitplansteuerungszustände der Teilnehmereinrichtung den Schritt zur Bestimmung der Mobilität der Teilnehmereinrichtung umfasst und wobei ein HSDPA-Träger ausgewählt wird, wenn bestimmt wird, dass eine aktuelle Mobilität der Teilnehmereinrichtung unter dem Schwellwert liegt und ein DCH-Träger ausgewählt wird, wenn bestimmt wird, dass die aktuelle Mobilität über dem Schwellwert liegt.

3. Verfahren nach einem der vorhergehenden Ansprüche, wobei der Mobilitätsschwellwert ein einstellbarer Mobilitätsschwellwert ist.

4. Verfahren nach einem der vorhergehenden Ansprüche 1 bis 3, ferner die folgenden Schritte umfassend:
kontinuierliches Prüfen der aktuellen Zustände der Teilnehmereinrichtung während der Sitzung, um zu erkennen, ob sich die aktuellen Zustände geändert haben;
wenn sich die Zustände geändert haben, Vergleichen der aktuellen Zustände mit den vorbestimmten Zeitplansteuerungszuständen;
wenn der Vergleich zwischen den aktualisierten Zuständen und den vorbestimmten Zeitplansteuerungszuständen erkennen lässt, dass der gewählte Datenträger gewechselt werden sollte; Auswählen des neuen Datenträgers für die Datenübertragungen auf der Grundlage des Vergleichs zwischen den aktualisierten Zuständen und den vorbestimmten Zeitplansteuerungszuständen; und
Verwenden des neuen Datenträgers zur Datenübertragung.

5. Verfahren nach einem der vorhergehenden Ansprüche 1 bis 4, wobei der Schritt zur Erkennung vorbestimmter Zeitplansteuerungszustände für Datenübertragungen für die Teilnehmereinrichtung beim Sitzungsbeschreibungsprotokollaufbau durchgeführt wird.

6. Verfahren nach einem der vorhergehenden Ansprüche 1 bis 5, wobei der Schritt zur Bestimmung der aktuellen Zeitplansteuerungszustände der Teilnehmereinrichtung beim Sitzungsbeschreibungsprotokollaufbau durchgeführt wird.

7. Verfahren nach Anspruch 6, ferner den folgenden Schritt umfassend: Einholen von Zeitplansteuerungszustandsinformation für die Teilnehmereinrichtung, um aktuelle Zeitplansteuerungszustände für die Teilnehmereinrichtung zu bestimmen.

8. Verfahren nach Anspruch 7, wobei die Zeitplansteuerungsinformation von der Teilnehmereinrichtung oder von dem Funknetzwerk-Controller eingeholt wird.

9. Verfahren nach einem der vorhergehenden Ansprüche, wobei die Zeitplansteuerungszustände einen Verkehrsflussparameter aufweisen und das Verfahren ferner den Schritt zum Prüfen des Verkehrsflusstyps in der Sitzung umfasst.

10. Verfahren nach Anspruch 9, wobei ein HSDPA-Träger ausgewählt wird, wenn der Verkehrsflussparameter erkennen lässt, dass zeitsensible Daten, einschließlich Video, Audio oder VoIP, in der Sitzung übertragen werden, und ein DCH-Träger ausgewählt wird, wenn der Verkehrsflussparameter erkennen lässt, dass kein zeitsensibler Verkehr, einschließlich Nichtechtzeitverkehr, in der Sitzung übertragen wird.

11. Funknetzwerk-Controller, RNC, (400) eines Kommunikationssystems, das eine Anzahl von Basisstationen steuert, wobei das Kommunikationssystem Datenübertragung von einer Basisstation (402) an eine Teilnehmereinrichtung (404) auf einem Hochgeschwindigkeitspaketzugriffsträger, HSPA-Träger, oder einem festgeschalteten Kanal, DCH, steuert, wobei der RNC dafür eingerichtet ist, Datenübertragungen an eine Teilnehmereinrichtung in dem Netzwerk zeitlich zu planen, **dadurch gekennzeichnet, dass** der Funknetzwerk-Controller umfasst:
Erkennungsmittel (406), die dafür eingerichtet sind, zumindest einen vorbestimmten Zeitplansteuerungszustand für Datenübertragungen für die Teilnehmereinrichtung zu erkennen;
Bestimmungsmittel (408), die dafür eingerichtet sind, zumindest einen aktuellen Zeitplansteuerungszustand der Teilnehmereinrichtung zu bestimmen;
Komparatormittel (410), die dafür eingerichtet sind, Zeitplansteuerungszustände der Teilnehmereinrichtung mit den aktuellen Zuständen der Teilnehmereinrichtung zu vergleichen;
Zeitplansteuerungsauswahlmittel (412), die dafür eingerichtet sind, einen Hochgeschwindigkeitspaketzugriffsträger, HSPA-Träger, oder einen festgeschalteten Kanal, DCH, für die Datenübertragung während einer Sitzung von einer Basisstation auf der Grundlage des Vergleichs auszuwählen, wobei der ausgewählte Datenträger während einer Datenübertragungssitzung verwendet wird oder bis ein neuer Datenträger ausgewählt worden ist.

12. Mobilkommunikationssystem, umfassend zumindest einen Funknetzwerk-Controller, RNC, (400) der eine Anzahl von Basisstationen (402) steuert, wobei das Kommunikationssystem Datenübertragung von einer Basisstation an eine Teilnehmereinrichtung auf einem Hochgeschwindigkeitspaketzugriffsträger, HSPA-Träger, oder einem festgeschalteten Kanal, DCH, unterstützt, wobei der RNC dafür eingerichtet ist, eine Teilnehmereinrichtung (404) in einer Datenübertragung in dem Netzwerk nach Zeitplan zu steuern, **dadurch gekennzeichnet, dass** der Funknetzwerk-Controller, RNC, dafür eingerichtet ist,
zumindest einen vorbestimmten Zeitplansteuerungszustand für Datenübertragungen für die Teilnehmereinrichtung zu erkennen;
zumindest einen aktuellen Zeitplansteuerungszustand der Teilnehmereinrichtung zu bestimmen;
die vorbestimmten Zeitplansteuerungszustände der Teilnehmereinrichtung mit den aktuellen Zuständen der Teilnehmereinrichtung zu vergleichen;
einen Hochgeschwindigkeitspaketzugriffsträger, HSPA-Träger, oder einen festgeschalteten Kanal, DCH, für die Datenübertragungen während einer Sitzung von einer Basisstation auf der Grundlage des Vergleichs auszuwählen; und
den ausgewählten Datenträger während der Datenübertragungssitzung oder bis ein neuer Datenträger ausgewählt worden ist, zu verwenden.

13. Teilnehmereinrichtung (404), die dafür eingerichtet ist, durch einen Funknetzwerk-Controller, RNC, (400) in einem Mobilkommunikationssystem nach Anspruch 12 nach Zeitplan gesteuert zu werden, wobei der Funknetzwerk-Controller, RNC, eine Anzahl von Basisstationen (402) steuert, wobei das Kommunikationssystem Datenübertragung von einer Basisstation (402) an eine Teilnehmereinrichtung (404) auf einem Hochgeschwindigkeitspaketzugriffsträger, HSPA-Träger, oder einem festgeschalteten Kanal, DCH, unterstützt, wobei die Teilnehmereinrichtung **gekennzeichnet ist durch**
Erkennungsmittel (508), die dafür eingerichtet sind, zumindest einen vorbestimmten Zeitplansteuerungszustand für Datenübertragungen für die Teilnehmereinrichtung zu erkennen;
Bestimmungsmittel (510), die dafür eingerichtet sind, zumindest einen aktuellen Zeitplansteuerungszustand der Teilnehmereinrichtung zu bestimmen;
Vergleichsmittel (512), die dafür eingerichtet sind, die vorbestimmten Zeitplansteuerungszustände der Teilnehmereinrichtung mit dem aktuellen Zuständen der Teilnehmereinrichtung zu vergleichen; und
Mittel zum Übermitteln (514) des Vergleichs an den Funknetzwerk-Controller, RNC, damit der RNC einen Hochgeschwindigkeitspaketzugriffsträger, HSPA-Träger, oder einen festgeschalteten Kanal, DCH, für die Datenübertragungen während einer Sitzung von einer Basisstation auf der Grundlage des Vergleichs auswählt.

14. Teilnehmereinrichtung nach Anspruch 13, wobei der zumindest eine vorbestimmte Zeitplansteuerungszustand ein Mobilitätsschwellwert der Teilnehmereinrichtung ist und wobei die Teilnehmereinrichtung Mittel zur Bestimmung der Mobilität der Teilnehmereinrichtung umfasst.

15. Teilnehmereinrichtung nach einem der vorhergehenden Ansprüche 13 bis 14, wobei der Mobilitätsschwellwert ein einstellbarer Mobilitätsschwellwert ist.

16. Teilnehmereinrichtung nach einem der vorhergehenden Ansprüche 13 bis 15, ferner umfassend:
Mittel zum kontinuierlichen Prüfen der aktuellen Zustände der Teilnehmereinrichtung während der Sitzung, um zu erkennen, ob sich die aktuellen Zustände geändert haben; und
wobei die Vergleichsmittel dafür eingerichtet sind, wenn sich die Zustände geändert haben, die aktualisierten Zustände mit den vorbestimmten Zeitplansteuerungszuständen zu vergleichen.

17. Teilnehmereinrichtung nach einem der vorhergehenden Ansprüche 13 bis 16, wobei die vorbestimmten Zeitplansteuerungszustände für Datenübertragungen für die Teilnehmereinrichtung beim Sitzungsbeschreibungsprotokollaufbau erkannt werden.

18. Teilnehmereinrichtung nach einem der vorhergehenden Ansprüche 13 bis 17, wobei die aktuellen Zeitplansteuerungszustände der Teilnehmereinrichtung beim Sitzungsbeschreibungsprotokollaufbau bestimmt werden.

19. Teilnehmereinrichtung nach einem der vorhergehenden Ansprüche 13 bis 18, wobei die Bestimmungsmittel dafür eingerichtet sind, die Mobilität einer Teilnehmereinrichtung **dadurch** zu bestimmen, dass eine Anzahl von Verbindungsübergaben pro Zeiteinheit für die Teilnehmereinrichtung bestimmt wird.

20. Teilnehmereinrichtung nach einem der vorhergehenden Ansprüche 13 bis 18, wobei die Bestimmungsmittel dafür eingerichtet sind, die Mobilität einer Teilnehmereinrichtung **dadurch** zu schätzen, dass eine Dopplerverschiebung einer Trägerfrequenz der Teilnehmereinrichtung berechnet wird, um eine Geschwindigkeit der Teilnehmereinrichtung in Bezug auf eine oder mehrere Basisstationen zu schätzen.

21. Teilnehmereinrichtung nach einem der vorhergehenden Ansprüche 13 bis 18, ferner einen GPS-Empfänger umfassend und wobei die Bestimmungsmittel dafür eingerichtet sind, die Mobilität der Teilnehmereinrichtung **dadurch** zu bestimmen, dass eine Position der Teilnehmereinrichtung in regelmäßigen Intervallen unter Verwendung der Positionierungsinformation bestimmt wird, die von einem Positionierungssystem über den GPS-Empfänger bezogen wird.

22. Teilnehmereinrichtung nach einem der vorhergehenden Ansprüche 13 bis 18, wobei die Zeitplansteuerungszustände einen Verkehrsflussparameter aufweisen und die Bestimmungsmittel dafür eingerichtet sind, den Verkehrsflusstyp in der Sitzung zu prüfen.

23. Computerlesbares Medium, umfassend Anweisungen, die dazu dienen, zu bewirken, dass eine programmierbare Vorrichtung Schritte des Verfahrens nach einem der Ansprüche 1 bis 10 durchführt.

## Revendications

1. Procédé destiné à planifier une transmission de données à un équipement utilisateur (404) dans un système de communication comportant au moins un contrôleur de réseau radio, RNC, (400) gérant un nombre de stations de base (402), dans lequel le système de communication prend en charge une transmission de données d'une station de base à un équipement utilisateur sur une porteuse à accès par paquets en haut débit, HSPA, ou sur un canal dédié, DCH, ledit procédé comportant les étapes ci-après consistant à :
identifier (200) au moins une condition de planification prédéterminée pour des transmissions de données pour ledit équipement utilisateur ;
déterminer (202) au moins une condition de planification en cours dudit équipement utilisateur ;
comparer (204) lesdites conditions de planification prédéterminées dudit équipement utilisateur auxdites conditions de planification en cours dudit équipement utilisateur ;
sélectionner (206) une porteuse à accès par paquets en haut débit, HSPA, ou un canal dédié, DCH, pour les transmissions de données au cours d'une session à partir d'une station de base sur la base de ladite comparaison ; et
utiliser (208) ladite porteuse de données sélectionnée au cours de la session de transmission de données ou jusqu'à ce qu'une nouvelle porteuse de données ait été sélectionnée.

2. Procédé selon la revendication 1, dans lequel ladite au moins une condition de planification prédéterminée représente un seuil de mobilité dudit équipement utilisateur et dans lequel ladite étape consistant à déterminer les conditions de planification en cours dudit équipement utilisateur comporte l'étape consistant à déterminer la mobilité dudit équipement utilisateur et dans lequel une porteuse à accès HSDPA est sélectionnée si une mobilité en cours dudit équipement utilisateur est déterminée comme étant inférieure audit seuil et une porteuse de canal DCH est sélectionnée si ladite mobilité en cours est déterminée comme étant supérieure audit seuil.

3. Procédé selon l'une quelconque des revendications précédentes, dans lequel ledit seuil de mobilité est un seuil de mobilité réglable.

4. Procédé selon l'une quelconque des revendications précédentes 1 à 3, comportant en outre les étapes ci-après consistant à :
vérifier en continu lesdites conditions de planification en cours dudit équipement utilisateur au cours de ladite session de manière à identifier si lesdites conditions de planification en cours ont changé ;
si lesdites conditions ont changé, comparer lesdites conditions mises à jour auxdites conditions de planification prédéterminées ;
si ladite comparaison entre lesdites conditions mises à jour et lesdites conditions de planification prédéterminées indique que la porteuse de données sélectionnée devrait être changée, sélectionner une nouvelle porteuse de données pour les transmissions de données sur la base de ladite comparaison entre lesdites conditions mises à jour et lesdites conditions de planification prédéterminées ; et
utiliser ladite nouvelle porteuse de données pour les transmissions de données.

5. Procédé selon l'une quelconque des revendications précédentes 1 à 4, dans lequel ladite étape consistant à identifier les conditions de planification prédéterminées des transmissions de données pour ledit équipement utilisateur est mise en oeuvre à l'établissement d'un protocole de description de session.

6. Procédé selon l'une quelconque des revendications précédentes 1 à 5, dans lequel l'étape consistant à déterminer des conditions de planification en cours dudit équipement utilisateur est mise en oeuvre à l'établissement d'un protocole de description de session.

7. Procédé selon la revendication 6, comportant en outre l'étape consistant à recueillir des informations de conditions de planification pour ledit équipement utilisateur de manière à déterminer des conditions de planification en cours pour ledit équipement utilisateur.

8. Procédé selon la revendication 7, dans lequel lesdites informations de planification sont recueillies à partir dudit équipement utilisateur ou à partir dudit contrôleur de réseau radio.

9. Procédé selon l'une quelconque des revendications précédentes, dans lequel lesdites conditions de planification incluent un paramètre de flux de trafic, et le procédé comporte en outre l'étape consistant à vérifier le type de flux de trafic dans ladite session.

10. Procédé selon la revendication 9, dans lequel une porteuse à accès HSDPA est sélectionnée lorsque ledit paramètre de flux de trafic indique que des données temporaires, notamment des données vidéo, audio ou VoIP, sont transmises dans ladite session, et une porteuse de canal DCH est sélectionnée lorsque ledit paramètre de flux de trafic indique que qu'un trafic non temporaire, notamment un trafic non temps réel, est transmis dans ladite session.

11. Contrôleur de réseau radio, RNC, (400) d'un système de communication gérant un nombre de stations de base, dans lequel le système de communication prend en charge une transmission de données d'une station de base (402) à un équipement utilisateur (404) sur une porteuse à accès par paquets en haut débit, HSPA, ou une porteuse à canal dédié, DCH, ledit contrôleur RNC étant apte à planifier des transmissions de données à un équipement utilisateur dans ledit réseau, **caractérisé en ce que** ledit contrôleur de réseau radio comporte :
des moyens d'identification (406) aptes à identifier au moins une condition de planification prédéterminée pour des transmissions de données pour ledit équipement utilisateur ;
des moyens de détermination (408) aptes à déterminer au moins une condition de planification en cours dudit équipement utilisateur ;
des moyens de comparaison (410) aptes à comparer lesdites conditions de planification prédéterminées dudit équipement utilisateur auxdites conditions de planification en cours dudit équipement utilisateur ;
des moyens de sélection de planification (412) aptes à sélectionner une porteuse à accès par paquets en haut débit, HSPA, ou une porteuse à canal dédié, DCH, pour les transmissions de données au cours d'une session à partir d'une station de base, sur la base de ladite comparaison, dans lequel ladite porteuse de données sélectionnée est utilisée au cours de la session de transmission de données ou jusqu'à ce qu'une nouvelle porteuse de données ait été sélectionnée.

12. Système de communication mobile comportant au moins un contrôleur de réseau radio, RNC, (400) gérant un nombre de stations de base (402), dans lequel le système de communication prend en charge une transmission de données d'une station de base à un équipement utilisateur sur une porteuse à accès par paquets en haut débit, HSPA, ou une porteuse à canal dédié, DCH, ledit contrôleur RNC étant apte à planifier un équipement utilisateur (404) dans une transmission de données dans ledit réseau, **caractérisé en ce que** ledit contrôleur de réseau radio, RNC, est apte à
identifier au moins une condition de planification prédéterminée pour des transmissions de données pour ledit équipement utilisateur ;
déterminer au moins une condition de planification en cours dudit équipement utilisateur ;
comparer lesdites conditions de planification prédéterminées dudit équipement utilisateur auxdites conditions de planification en cours dudit équipement utilisateur ;
sélectionner une porteuse à accès par paquets en haut débit, HSPA, ou une porteuse à canal dédié, DCH, pour les transmissions de données au cours d'une session à partir d'une station de base, sur la base de ladite comparaison ; et
utiliser ladite porteuse de données sélectionnée au cours de la session de transmission de données ou jusqu'à ce qu'une nouvelle porteuse de données ait été sélectionnée.

13. Équipement utilisateur (404) apte à être planifié par un contrôleur de réseau radio, RNC, (400) dans un système de communication mobile selon la revendication 12, ledit contrôleur de réseau radio, RNC, gérant un nombre de stations de base (402), dans lequel le système de communication prend en charge une transmission de données d'une station de base (402) audit équipement utilisateur (404) sur une porteuse à accès par paquets en haut débit, HSPA, ou une porteuse à canal dédié, DCH, l'équipement utilisateur étant **caractérisé par**
des moyens d'identification (508) aptes à identifier au moins une condition de planification prédéterminée pour des transmissions de données pour ledit équipement utilisateur ;
des moyens de détermination (510) aptes à déterminer au moins une condition de planification en cours dudit équipement utilisateur ;
des moyens de comparaison (512) aptes à comparer lesdites conditions de planification prédéterminées dudit équipement utilisateur auxdites conditions de planification en cours dudit équipement utilisateur ; et
des moyens pour communiquer (514) ladite comparaison audit contrôleur de réseau radio, RNC, afin que le contrôleur RNC sélectionne une porteuse à accès par paquets en haut débit, HSPA, ou une porteuse à canal dédié, DCH, pour les transmissions de données au cours d'une session à partir d'une station de base, sur la base de ladite comparaison.

14. Équipement utilisateur selon la revendication 13, dans lequel ladite au moins une condition de planification prédéterminée est un seuil de mobilité dudit équipement utilisateur et dans lequel l'équipement utilisateur comporte des moyens pour déterminer la mobilité dudit équipement utilisateur.

15. Équipement utilisateur selon l'une quelconque des revendications précédentes 13 à 14, dans lequel ledit seuil de mobilité est un seuil de mobilité réglable.

16. Équipement utilisateur selon l'une quelconque des revendications précédentes 13 à 15, comportant en outre :
des moyens permettant de vérifier en continu lesdites conditions de planification en cours dudit équipement utilisateur au cours de ladite session de manière à identifier si lesdites conditions de planification en cours ont changé ; et
dans lequel lesdits moyens de comparaison sont aptes à, si lesdites conditions ont changé, comparer lesdites conditions mises à jour auxdites conditions de planification prédéterminées.

17. Équipement utilisateur selon l'une quelconque des revendications précédentes 13 à 16, dans lequel les conditions de planification prédéterminées pour les transmissions de données destinées audit équipement utilisateur sont identifiées à l'établissement d'un protocole de description de session.

18. Équipement utilisateur selon l'une quelconque des revendications précédentes 13 à 17, dans lequel les conditions de planification en cours dudit équipement utilisateur sont déterminées à l'établissement d'un protocole de description de session.

19. Équipement utilisateur selon l'une quelconque des revendications précédentes 13 à 18, dans lequel lesdits moyens de détermination sont aptes à déterminer la mobilité dudit équipement utilisateur en déterminant un nombre de transferts intercellulaires par unité de temps pour ledit équipement utilisateur.

20. Équipement utilisateur selon l'une quelconque des revendications précédentes 13 à 18, dans lequel lesdits moyens de détermination sont aptes à déterminer la mobilité dudit équipement utilisateur en calculant un décalage Doppler d'un fréquence de porteuse dudit équipement utilisateur de manière à estimer une vitesse dudit équipement utilisateur relativement à une ou plusieurs stations de base.

21. Équipement utilisateur selon l'une quelconque des revendications précédentes 13 à 18, comportant en outre un récepteur GPS et dans lequel lesdits moyens de détermination sont aptes à déterminer la mobilité dudit équipement utilisateur en déterminant une position dudit équipement utilisateur à des intervalles réguliers, en utilisant des informations de positionnement obtenues à partir d'un système de positionnement via ledit récepteur GPS.

22. Équipement utilisateur selon l'une quelconque des revendications précédentes 13 à 18, dans lequel lesdites conditions de planification incluent un paramètre de flux de trafic et lesdits moyens de détermination sont aptes à vérifier le type de flux de trafic dans ladite session.

23. Support lisible par un ordinateur comportant des instructions pour amener un dispositif programmable à mettre en oeuvre les étapes du procédé selon l'une quelconque des revendications 1 à 10.
